# EUROPEAN PATENT SPECIFICATION

(11) **EP 4 072 898 B1**
(45) Date of publication and mention of the grant of the patent: **07.08.2024**
(21) Application number: 19842603.3
(22) Date of filing: 10.12.2019
(51) Int. Cl.: B60N 2/28

(54) **SIDE IMPACT PROTECTION DEVICE**
SEITENAUFPRALL-SCHUTZEINRICHTUNG
DISPOSITIF DE PROTECTION CONTRE LES CHOCS LATÉRAUX

(43) Date of publication of application: 19.10.2022
(73) Proprietor: Inneva Limited, Derby Derbyshire DE74 2HP (GB)
(72) Inventor: CARINE, David Shaun, Derby Derbyshire DE74 2HP (GB)
(74) Representative: Adamson Jones
(86) International application number: PCT/GB2019/053492
(87) International publication number: WO 2021/116638

(56) References cited:
- CN-A- 107 985 143
- CN-A- 108 674 265
- US-A1- 2004 164 529

## Description

The present invention relates to safety seats, particularly for child passengers in vehicles. In one form the safety seat includes a plurality of air bags placed in the side wings of the seat.

### BACKGROUND

To accommodate a child's safety, child sized safety seats are installed usually on the rear seat of a vehicle, in which the occupant may be contained with additional cushioning due to the fragile nature of a child or infant, with particular attention to the head area.

Child safety seats are designed to contain a child and, in the event of a collision, to provide protection from impact, where the danger originates from the safety seat colliding with either of the inner side walls of the vehicle, debris within the vehicle, or another vehicle, all of which become a danger to the child when impinging on the space occupied by the safety seat. The collision may occur in a frontal, rear or side direction, in relation to the forward motion of the vehicle. Side impacts are of particular importance since they account for a third of accidents with the majority being frontal impacts. The remainder are rear impacts and rollover events. While head strike in a frontal impact is the most life-threatening injury mechanism the safety seat occupant is also in particular danger from side collisions. Increased danger results from the empty space between the wings of the safety seat and the interior wall off the car, acting as a free flight zone which creates, unless utilised, a dynamic inefficiency in terms of offering optimum occupant protection.

Conventional safety seats are designed to accommodate a plurality of ages of the occupant and therefore a plurality of potential physical sizes of the occupant. For a smaller occupant this leads to further empty space between the occupant and the side wings of the safety seat. This space also forms an acceleration zone that, in the event of an impact, allows the occupant to build impact energy during a collision.

Some empty space between the occupant and the safety seat wings is normal, to allow comfort and movement but, even for a larger occupant who fills the interior space of the safety seat to a greater extent, an acceleration zone is still present by means of the gap between the exterior of the safety seat and the interior of the vehicle wall. Meanwhile the dimensions of the gap between the seat wings and interior side wall can vary from vehicle to vehicle, dependent on the overall width. Furthermore, in order to comply with European regulations, the safety seat must be able to fit within a given volume. It is noteworthy that volumetric checking fixtures are used to promote the ability of the vehicle to accommodate regulated child safety seats which have been assessed to the nominated volumetric boxes. Child seats are designed to fit within the volumes and vehicle seating positions are checked to see which fixtures can be accommodated. This allows selection of the appropriate child seat for a declared vehicle position.

Several child seat designs, including with inbuilt airbags, are known. For example, Australian patent number 2008335137 discloses layers of absorbing media coupled with an inflatable cushion situated on the external side of the restraint as one aspect of a child safety seat. Upon impact the air is released from a deformable, inflatable vessel through a valve to controllably absorb impact energy.

US patent number 8029054 discloses a sandwich configuration of air bladders and absorbing material. Air is controllably released from a deformable airbag situated on the exterior of the safety seat to provide ride-down time after impact by an external force.

US patent publication number 2009/0179470 discloses inflatable cushioning for the head and body of an occupant in a safety seat, allowing adjustment of an interior volume of the safety seat to suit the size of the occupant. Fluid is displaced between inflatable cushions to absorb impact energy during a collision. Absorbent materials are situated on the interior of the safety seat only.

Australian patent number 2016213797 discloses an elastically deformable headrest for a child safety seat. The possible materials used by the preferred embodiments are chosen to be impact absorbing with the effect of lessening injury by deflection or cushioning. The headrest is only adjustable in height, in relation to the backrest, leaving the interior volume fixed.

Australian patent number 2013248252 discloses a child safety seat with passive cushioning provided, extending inwardly and outwardly by means of apertures in the wings of the safety seat. These cushions are non-adjustable.

US patent publication number 2004/0164529 A discloses a child safety seat with gas bags arranged on the interior and exterior of the safety seat providing protection for the head and body in the event of a side impact, as well as a frontal airbag. The lateral airbags cannot be extended to meet the interior walls of the vehicle. In operation the airbag brace is irreversibly deformed and cannot be reused. The airbags are of constant extension and fixed in position to at least one side of the safety seat with, in some embodiments, the external airbags not being aligned below the window sill of the vehicle wall.

CN107985143 discloses a child safety seat comprising a seat backrest, a headrest, a buffering device, a first air guide hole, a buffering energy absorption device, a second air guide hole and an air guide valve, wherein the inside of the buffering device is a hollow sealing structure.

CN108674265 discloses a telescopic side protection air bag for a child safety chair. The telescopic side protection air bag comprises a side protection base arranged on the outer side surface of a chair body, and is characterized in that side protection air bags capable of realizing telescopic storage are arranged on the side protection base.

The foregoing prior art lacks a means to more significantly reduce the acceleration zones both inside and outside the interior space of the child safety seat, particularly in relation to a side impact. There is also a lack of provision for air bags to be conveniently reusable and collapsible for stowage.

### SUMMARY OF THE INVENTION

The current invention seeks to address the lack of convenience and empty spaces in the prior art, thereby increasing the ride down time in the case of a lateral impact in vehicles of various sizes where the safety seat is positioned at either left or right side of the rear bench seat. Ride down time refers to the time interval in which deceleration takes place after the impact, increased by the cushioning of the interior bladder. According to the invention, filling these empty spaces with absorbing airbags that can externally be extended according to the distance between the safety seat and the vehicle interior wall, the lateral impact during a collision is controllably released by movement of the volume of air from one air bag to another. Further, the plurality of configurations of the external airbag is designed to increase the convenience of storage and reuse in relation to the prior art.

At the least the invention will provide the public with a useful safety feature for a child seat.

According to a first aspect of the present invention a safety seat is provided according to claim 1. The safety seat may be a child safety seat including a body for receiving an occupant, the body comprising the seat portion, the side walls and the backrest portion of the safety seat. The headrest may comprise wings. The internal and external bladders may be air bladders, wherein the bladders correspond in position to at least the head section and a substantive side portion of the safety seat. The interior air bladder may be fixed and initially in a compressed state, being positioned on at least one interior side of said side walls; with the exterior bladder positioned on the exterior side of said side walls. The air bladders may have at least one valve to allow equilibration to ambient pressure and the retention of a volume of fluid during operation.

It will be apparent to a skilled person that an improvement on existing designs for child safety seats found in the invention consists in the two air bladders, one positioned internally and one positioned externally to the wall of the child safety seat. Herein these bladders are referred to as the external air bladder and the internal air bladder, although could be termed 'primary' and 'secondary' air bladders respectively.

Preferably the external air bladder is transferrable from one side of the child seat body to the other side to account for the positioning of the safety seat within the vehicle (i.e. left or right side of the rear bench seat). Preferably the volume ratio of external to internal airbags is 2.25:1 or greater. The ratio could generally be within the range 1:1 to 4:1 but any suitable ratio can be determined during implementation of the invention. In use, the external air bladder is open to the atmosphere via a valve, therefore it is possible to adjust the extension of the external bladder so as to span the gap between the child safety seat wing and the vehicle interior wall, the value of which will change depending on the vehicle in use.

When subjected to a lateral impact, the external air bladder becomes closed off and seals the working air within the system while pressure and volume transfer takes place. When installed at rest in the vehicle, the external air bladder, being in a decompressed state, extends from the side wing of the safety seat toward the interior wall of the car while the internal bladder is within the walls of the safety seat in a compressed state. Preferably the bladders are connected and, upon side impact, the external bladder compresses and air flows to inflate the internal air bladder. The internal air bladder then provides cushioning for the occupant. According to the invention air flow occurs from external to internal bladder, in particular upon side impact of the car wherein the door of the vehicle is pushed through the frame of the vehicle.

In one form, the internal bladder protects the head of the occupant by decreasing the acceleration zone between the occupant's head and the interior side wall of the safety seat body, as well as that between the safety seat and the vehicle wall.

In another form, protection to the whole upper body is provided by an extension of the internal bladder throughout the height of the interior of the side wing of the safety seat or, in another form, by fitting a second combination of external and internal bladders at a lower height.

Preferably the fluid used with the bladders is ambient air, negating the need for supplementary stored gases.

Alternatively, the bladders may be filled with a fluid other than air and perform cushioning through transfer of volume in a similar way, with a further bag acting as a reservoir.

In a further aspect, the external air bladder is adjustable in position to either left or right side of the safety seat, with an internal airbag and connecting manifold remaining static features. This enables protection in relation to whichever vehicle interior wall the safety seat is installed in proximity to.

Preferably, the external airbag extends below the typical window sill height of a vehicle, enabling effective performance not limited by the structural integrity or retracted state of the window pane in the event of a collision.

As describe above, it will be apparent that the invention is implemented by an external air bag that extends outwardly from the body wings and transfers an air volume as it compresses to the initially compressed internal bag, causing the inner bag to inflate and cushion the head or upper body of the occupant of the safety seat. The invention serves to decrease the available acceleration zone during a collision, increase ride down time, and allow early loading onset, and thereby improve the safety of the occupant. In a preferred form the invention further features an adjustable external airbag for tailoring the safety seat to the vehicle dimensions and being collapsible for stowage. In one form the external bladder may be a collapsible bellow, e.g. of silicone/rubber. Such a form has an advantage of being adjustable in the y-axis depending on the space available in the vehicle and negates the need for a catch when collapsed as it is self-supporting in both extended and collapsed positions.

Further, the airbag system described herein is reusable, as no components are irreversibly deformed during use. It is possible to extend and retract the external air bladder in order to stow the safety seat, or to install it in a vehicle. This reversible motion of inflating and deflating the exterior airbag is achieved by a small aperture, which might comprise a valve, in the exterior air bladder. During an impact the air cannot escape quickly thereby retaining the pressure and volume within the airbag system. Following an impact the external airbag can be decompressed and returned to its original state.

### BRIEF DESCRIPTION OF THE DRAWINGS

Fig. 1 illustrates a perspective view of child safety seat according to an embodiment of the invention wherein external and internal air bladders are installed on one side;
Fig. 2(a) illustrates an isometric view of a child safety seat according to the invention showing a cutaway of the interior of the external air bladder, internal air bladder and a portion of the headrest;
Fig 2(b) shows a cutaway of the external air bladder, the connection between air bladders and the valve;
Fig. 3(a) shows a side perspective view of the child seat where the external air bladder is fully inflated/decompressed;
Fig. 3(b) shows a plan view of the child seat from Fig. 3(a) where the external air bladder is fully inflated/decompressed;
Fig. 4(a) shows a side perspective view of the child seat where the external air bladder is compressed/folded for storage;
Fig. 4(b) shows a plan view of the child seat from Fig. 4(a) where the external air bladder is compressed/ folded for storage;
Fig. 5(a) shows the connection between the external and internal air bladders wherein the internal air bladder remains compressed while the external air bladder is decompressed;
Fig. 5(b) shows the connection between the external and internal air bladders wherein the external bladder is compressed;
Figs. 6(a), 6(b) and 6(c) show a sequence of steps for the attachment of a removable external air bladder from a rear exterior view of the safety seat shown in Fig 1;
Fig. 7(a) shows the safety seat of fig. 1 prior to collision;
Fig 7(b) shows the safety seat of Fig. 1 at the point of collision, with arrows indicating air flow within the air bladder system.

### DETAILED DESCRIPTION OF THE PREFERRED EMBODIMENTS

Advantages of the invention will become apparent from the following detailed description, taken in conjunction with the accompanying drawings that illustrate two embodiments of the invention. However, the scope of the invention is not intended to be limited to the precise details of the embodiments, with variations apparent to a skilled person deemed also to be covered by the description of this invention. Furthermore, terms for components used herein should be given a broad interpretation that also encompasses equivalent functions and features. Descriptive terms should also be given the broadest possible interpretation; e.g. the term "comprising" as used in this specification means "consisting at least in part of" such that interpreting each statement in this specification that includes the term "comprising", features other than that or those prefaced by the term may also be present. Related terms such as "comprise" and "comprises" are to be interpreted in the same manner. The present description refers to embodiments with particular combinations of features, however, it is envisaged that further combinations and cross-combinations of compatible features between embodiments will be possible.

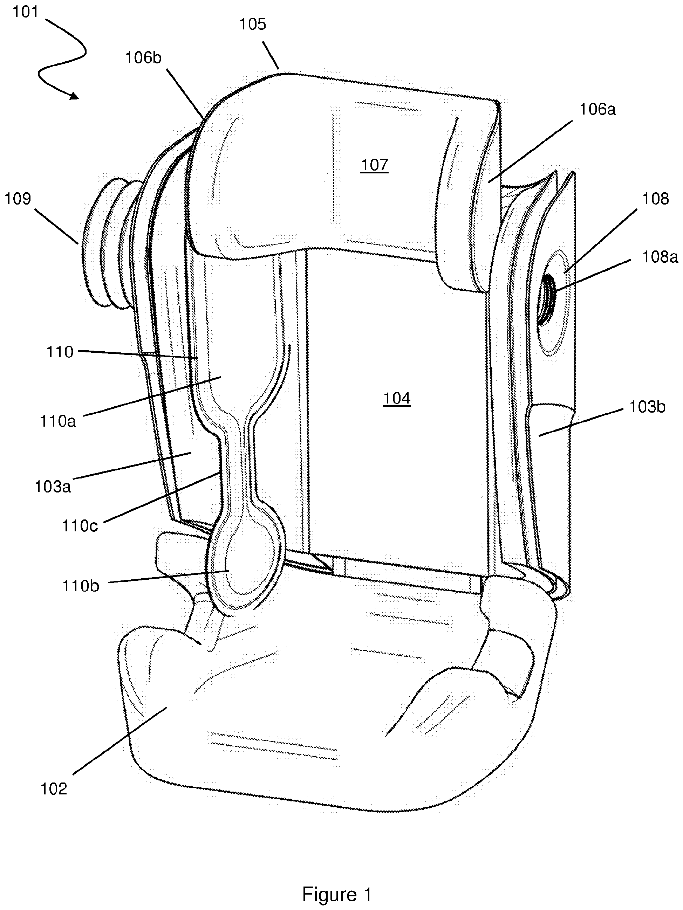

As shown in Fig. 1, a child seat 101 includes a seat portion 102, for receiving a pelvic region of a child; side wall portions 103a and 103b, extending forward from and connected to a back portion 104, for receiving the back and arms of a child; and a headrest 105, including side head cradling portions 106a and 106b, extending from and connected to rear portion 107, for receiving the head of the child.

The side wall portions 103 of the seat body 101 feature a visible opening 108 for connecting the airbag system comprising external 109 and internal 110 air bladders and a connecting portion. The external air bladder 109 and internal air bladder 110 occupy a connective opening - obscured on the left hand side, but visible on the right hand side, denoted 108. The air bladders could be filled with ambient air or another suitable fluid such that a reservoir may be provided in addition to the illustrated air bladders. The headrest 107, back portion 104, side portions 103a and 103b and seat portion 102 are preferably comprised primarily of a shock absorbing material, however, other materials and combinations such as rigid and shock absorbing layers, can be contemplated.

The headrest 105 is movable with respect to the seat 101 (i.e. the back portion 104, side 103a,103b etc.). The headrest 105 is movable in a lateral direction (i.e. in a horizontal direction in use). The headrest 105 is therefore movable in the space between the side walls 103a,103b in use. In this regard, the headrest 105 may be mounted to the seat 101 via a bracket/connector or the like that allows some play or tolerance in the position of the headrest. The seat may comprise a height adjustment mechanism for the headrest which may create play/tolerance in the lateral position of the headrest.

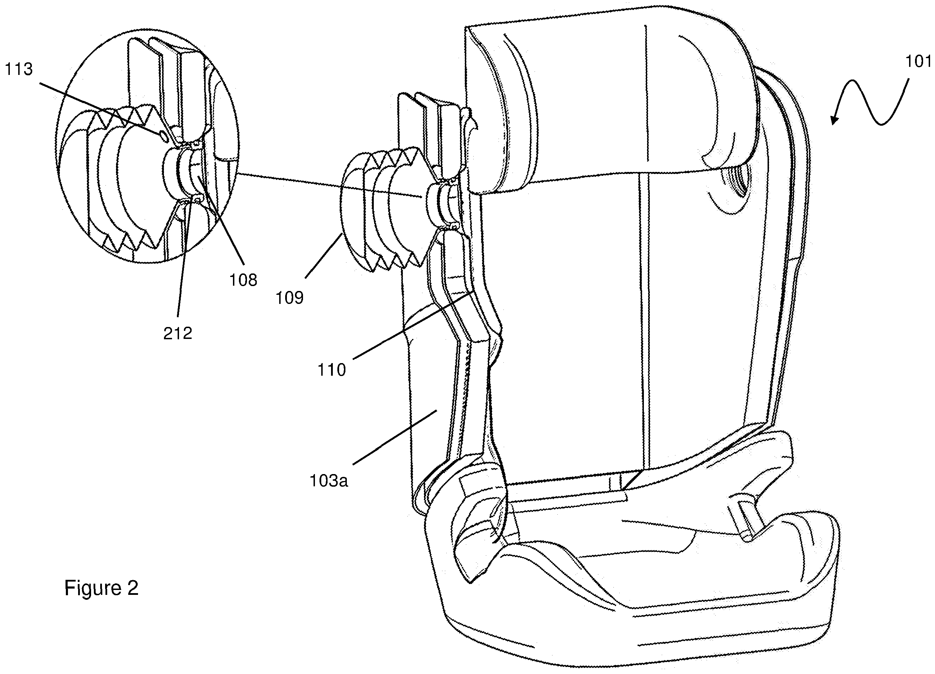

Fig. 2(a) shows the safety seat of Fig. 1 with a cutaway section detailing the interior of the connection between air bladders 109 and 110. In this embodiment the air bladders 109 and 110 are installed on either side of the side wall portion 103a with the opening 108 left empty on side portion 103b. External bladder 109 preferably has greater volume than the internal bladder 110, although it is noted that the internal bladder 110 may be configured to occupy a greater surface area. The external air bladder 109 is fully decompressed, i.e. expanded, and connected to the internal air bladder 110 which preferably extends the length of the interior of the side portions 103a and 103b.

The internal bladder 110 extends down the lateral side 103b of the seat 101. In the present embodiment, the internal bladder 110 extends down substantially the full length of the lateral side 103b. The internal bladder 110 therefore spans the length between the top of the side 103b and the seat portion 102. As such the internal bladder 110 is elongate. In other examples, the internal bladder may extend part-way down, e.g. a majority of the way down, the lateral side wall.

The internal bladder 110 comprises a first end portion and a second end portion. The first end portion may be axially elongate. The second end portion may be smaller than the first end portion. The second end portion may be substantially circular.

The first and second end portion may be connected via a narrow neck portion.

The first end of the internal air bladder 110 is interposed the side wall 103a and headrest 107. The first end portion at least partially overlaps with the headrest cradle/wing 106a. The fist end portion may engage the upper torso (e.g. the arms) of the child in use.

The second end portion is provide the seat portion 102 and engages the lower torso and/or hips of the child in use.

It will be apparent to one skilled in the art that the airbag system can alternatively and/or in addition be installed on side portion 103b to achieve the same effect for an impact originating in an opposite direction or depending on the side of most proximal interior wall of the vehicle.

In the embodiment of the invention shown by Fig. 2(a) the fluid within the airbags is preferably ambient air and may be replenished and relieved to the atmosphere. Communication with atmosphere is via a valve 113, as shown in Fig. 2(b) proximate to which there is also a connection 212 for air occupying the empty space of the decompressed external bladder 109 to communicate with the opening for the compressed internal air bladder 110. The valve 113 allows pressure within the air bladders to equilibrate with the atmosphere and relieves the internal pressure of the airbags in a controlled manner, such that during a collision the controlled deflation of the airbag due to the pressure of the head of the occupant reduces the acceleration of the head of the occupant. In the event of such an impact the valve is configured to allow only a small volume of air already in the airbag system to escape while the air will be primarily pushed from the external to the internal airbags.

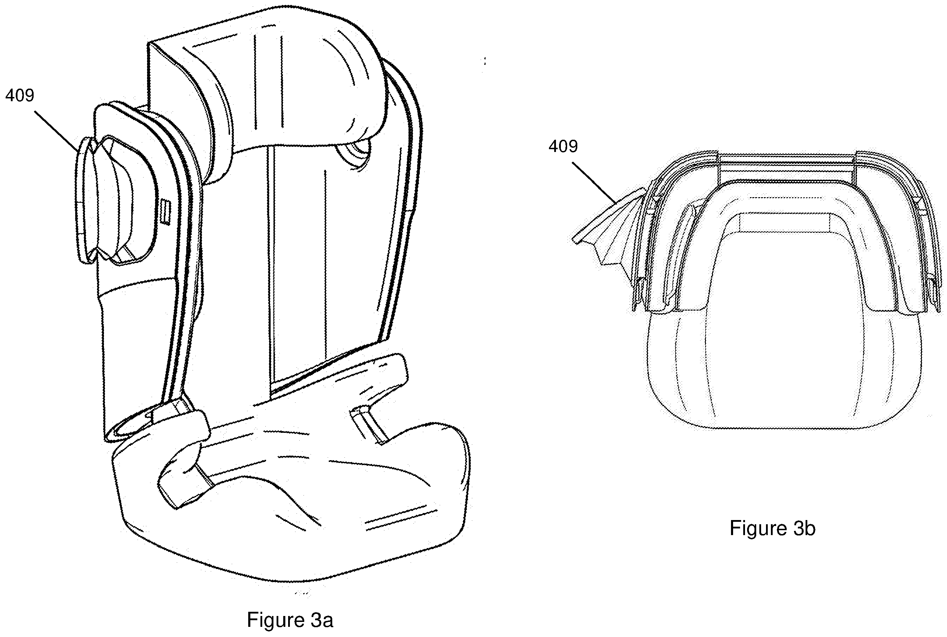

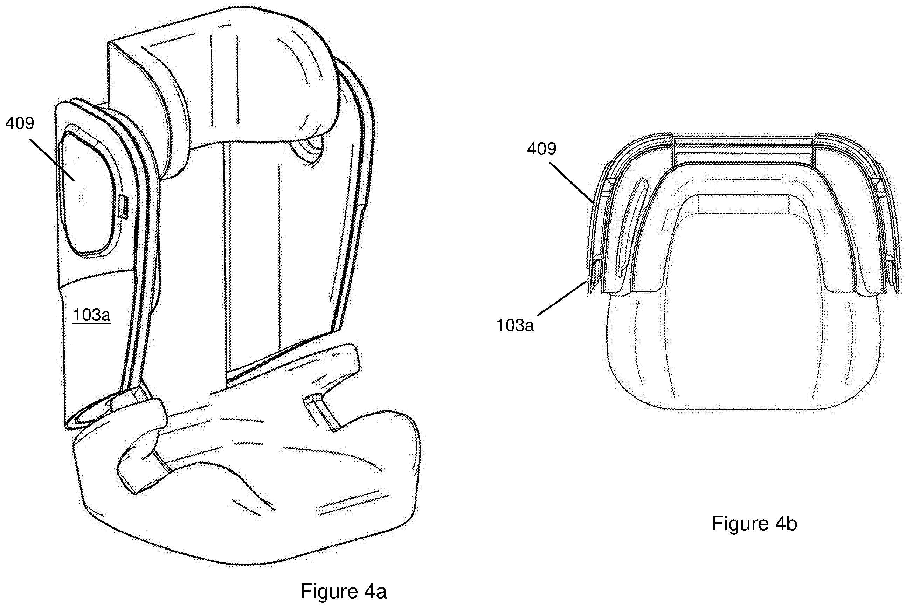

Figs 3 and 4 show various views of another embodiment of the present invention, wherein the external or primary airbag 409 is incorporated with a hinged element in order to facilitate compressing from an open position (Figs. 3(a) and (b)) toward a closed position (Figs. 4(a) and (b). The primary airbag 409 is effectively hinged to side wall portion 103a and can be latched into the closed position.

In a preferred form (of any embodiment disclosed herein) the bladder is made of a resilient material such that the concertina structure retains its extended form when manually expanded in order to be filled with air. In this embodiment the air bag system can be relocated from left side 103a to right side 103b by utilising the opening 108. Alternatively, a permanent right side hinged element/external bladder 409 could be installed, i.e. a hinged bladder at both sides. In general the external bladder should be biased to maintain an inflated position which could be by virtue of a relatively rigid/resilient surface material or internal structure. The internal bladder could be optionally biased to a deflated position that is inflated only upon sufficient force (such as an impact) which overcomes the bias.

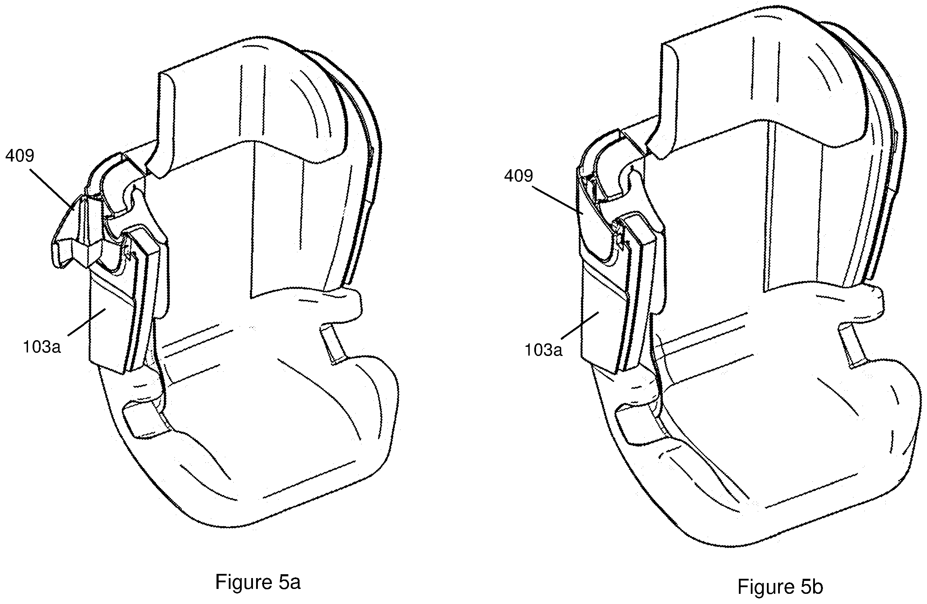

Fig. 3(b) shows a view from above the safety seat wherein the expanded concertina fold of the airbag is clearly seen while Fig. 4(b) shows the fully compressed external airbag from above, showing that the outer panel/hinged element lies flush with the exterior of left side portion 103a. Figs 5(a) and 5(b) show a cutaway view wherein the external and internal air bladders 409 are fixed to one side 103a of the safety seat. The connection between the airbags is revealed by the cutaway where the volume of the decompressed external airbladder 409 in Fig. 5(a) can be released, e.g. into the atmosphere via a valve (not seen), allowing the external airbag to be deflated, for example for stowage. In this embodiment the external air bladder 409 can be latched closed as in Fig 5(b). Fixing the airbag to one side of the safety seat as in Figs. 5(a) and 5(b) provides impact absorbance from one lateral direction only and is most suitable where industry standards advise placement of a vehicle seat on a particular side of the vehicle, e.g. behind a drivers or passenger seat. It will be apparent to a skilled person that the seat can be configured with a second external and internal air bag system on the opposite side, thereby providing the option for relocating the seat to the other side of a rear vehicle bench seat.

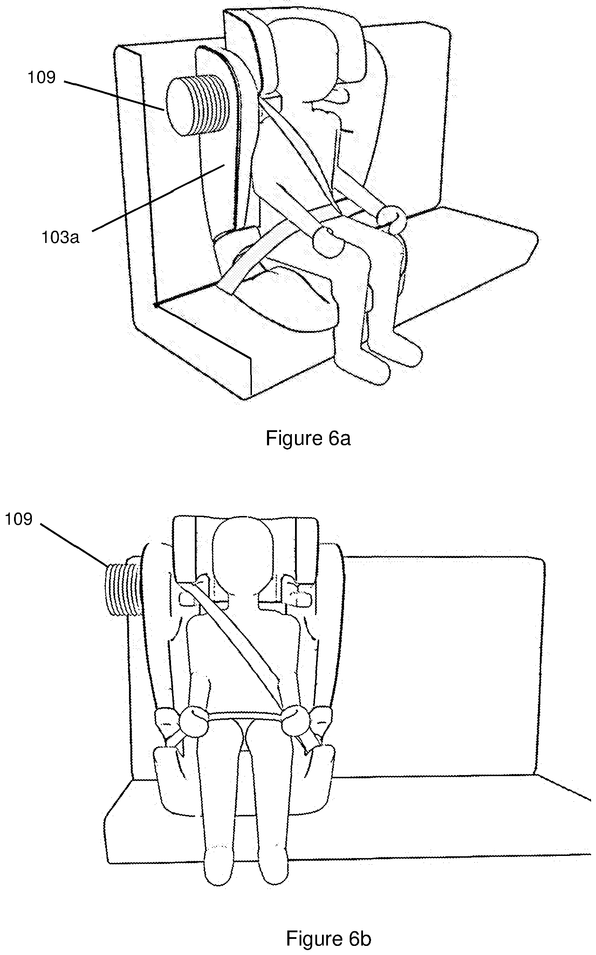

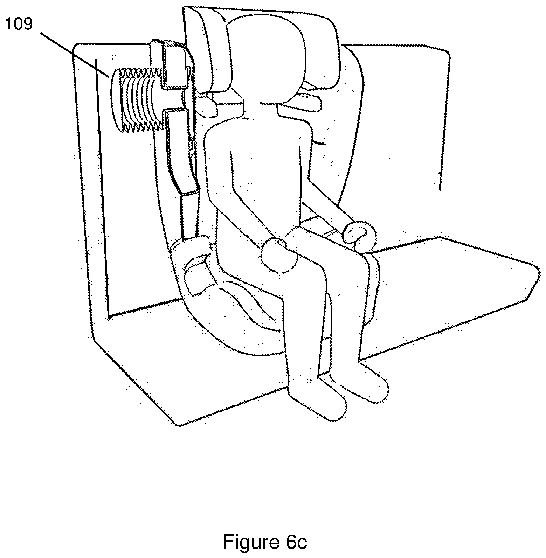

Figs. 6(a), (b) and (c) show the safety seat of Fig. 1 from a rear angled view. In this embodiment the primary/external air bladder 109 is selectively removable from the seat 101. The external air bladder 109 comprises a threaded connector configured to be screwed into a correspondingly threaded recess 108 (see fig. 1). In other examples, a bayonet, twist-lock or push-lock connector, or other suitable connector could be used. The connection may be releasable.

The internal air bladder can be connected in a similar fashion within the side portions 103a and 103b or may be retained by a resilient connection. A threaded connection enables easy operation and installation of the airbag system according to the day to day functionality wherein the safety seat may be moved frequently from one side of the rear vehicle seat to the other.

A variation on construction of the external bladder 109 can involve forming the component as a collapsible bellow, e.g. of silicone/rubber, which is able to maintain both a self-supporting collapsed state and self-supporting expanded state. Common devices that use this construction methodology include space saving bowls/cups for camping/lifestyle applications, e.g. where the bowl or cup can pop-out from a stowed/collapsed state to an expanded state ready for use. Such a form as applied to the safety seat of the invention has an advantage of being adjustable in the y-axis depending on the space available in the vehicle and negates the need for a catch when collapsed as it is self-supporting in both extended and collapsed positions.

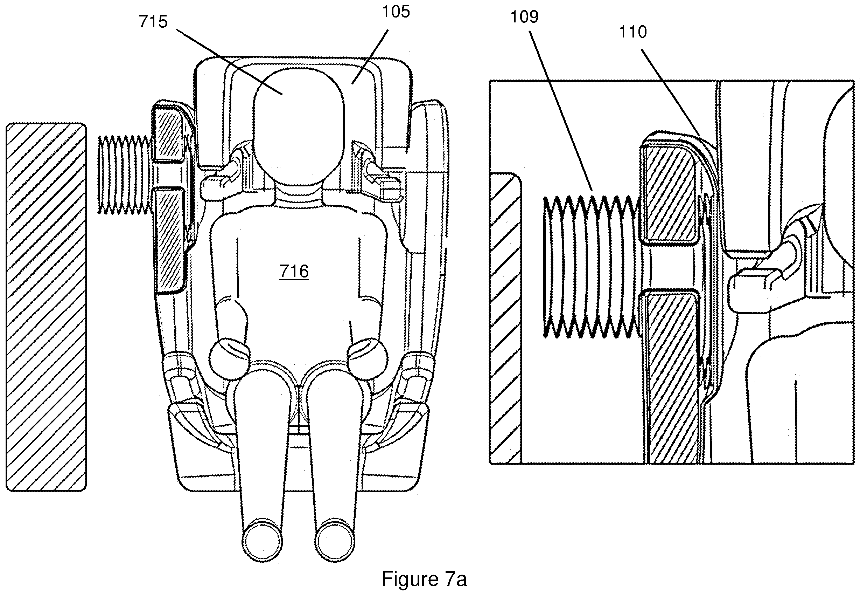

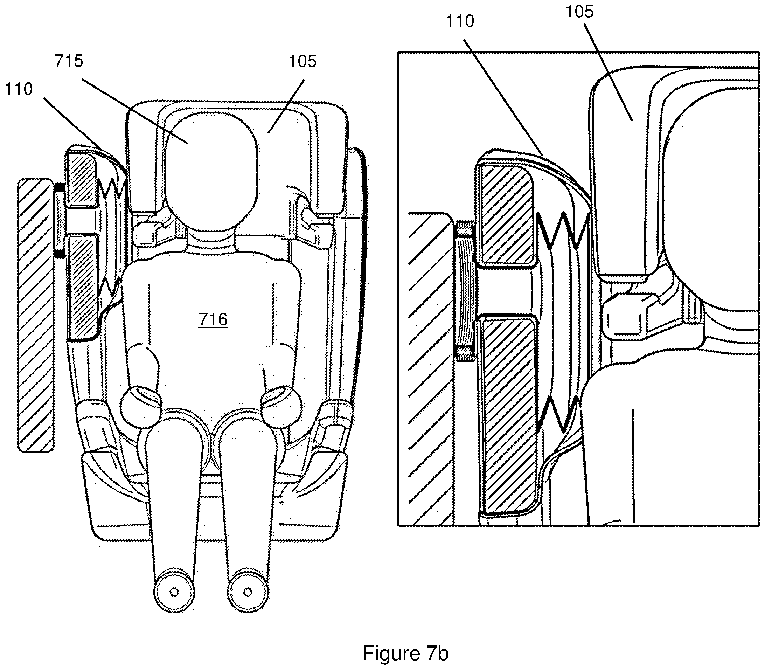

Fig. 7(a) shows the resting position of an occupant, e.g. a young child, with head 715 resting in headrest 105, having upper body 716 flanked by side wall portions 103a and 103b and seated by seat portion 102. By contrast, Fig. 7(b) shows an impact event where air is transferred from the external air bladder 109 by its compression to the internal air bladder 110 upon impact with an external object, e.g. interior wall/door of vehicle 714.

Directional arrows indicate the flow of air into internal bladder 110, the upper portion of which pushes the wing of headrest 105 towards the occupant's head 715 via lateral movement thereof, and the lower portion of which expands from side portion 103a to cushion the impact on the upper body 716. During a side impact event against the inner bag the torso 716 of the occupant will be the first contact point against the lower portion of the internal bladder 110 and will, as a result, generate a pressure rise to further improve the response of the upper portion of 110 to generate enhanced response time and displacement of the headrest 105 bias to collect/accommodate the occupant's head 715.

In alternative forms internal bladder 110 could form or be incorporated with headrest 105 such that it inflates upon impact. Preferably the wings and general structure of headrest 105 are of a resilient foam or equivalent.

The valve mentioned herein may be a small aperture that restricts airflow due to its size or it may be a valve, i.e. being actuatable between closed and open conditions. The valve might be a simple aperture 113 as pictured, positioned such that it allows equalization with ambient air for the external bladder. The valve location when subjected to impact acts to cut-off or restrict external bladder pressure bleed away from inflation of the inner bladder. As such, the valve is provided on a portion of the external bladder that is obscured (i.e. engages the seat 101 or another portion of the bladder 109) when the bladder is in the compressed state. For example, as shown in figure 2, valve is provided on a portion of bladder facing the seat 101. When the bladder is compressed, the valve engages the side wall 103a and is therefore obscured, preventing release of air therefrom. In other embodiments, the valve may be obscured by the bladder itself, for example, the valve could be provided in one of the folds of the bellows.

It will be apparent that the seat of the invention is a 'standalone' device that is not reliant on an existing vehicle air bag system. Such a seat can be installed into existing vehicles with or without an air bag system. The safety seat is considered 'in use' when in a condition ready to function as a safety device, i.e. with the external air bag deployed.

## Claims

1. A safety seat (101) including:
a seat portion (102), a pair of side walls (103a, 103b) and a back rest portion (104) for receiving an occupant;
an internal bladder (110) at an interior side of at least one of the pair of side walls (103a, 103b);
an external bladder (109) at an exterior side of the at least one of the pair of side walls (103a, 103b);
wherein the external bladder (109) is configured to fluidly communicate, through the at least one of the pair of side walls (103a, 103b), with the internal bladder (110);
wherein, in use, the external bladder (109) is configured to be in a decompressed state and the internal bladder (110) is configured to be in a compressed state, such that an impact event against the external bladder (109) causes inflation of the internal bladder (110), **characterized in that**
the safety seat (101) further includes a headrest (105) that is laterally moveable.

2. The safety seat (101) of claim 1 wherein the external bladder (109) is located in a position corresponding to at least a head portion and/or a substantive portion of the at least one of the pair of side walls (103a, 103b).

3. The safety seat (101) of claim 1 or 2 wherein the external (109) and/or internal bladder (110) includes at least one valve or aperture (113) configured to allow equilibrium to ambient pressure and/or the retention of the volume of fluid during operation, and wherein the external bladder (109) can be refilled after deflation by expansion, drawing in air through the valve or aperture (113).

4. The safety seat (101) of any preceding claim wherein the external bladder (109) is biased to the decompressed state, and wherein the bias to the decompressed state is provided by a concertina or bellows structure.

5. The safety seat (101) of any preceding claim wherein the external bladder (109) includes a threaded connector for receipt by an opening through the at least one of the pair of side walls (103a, 103b).

6. The safety seat (101) of any preceding claim wherein the external bladder (109) is incorporated into or includes a hinged portion, hingedly connected with the at least one of the pair of side walls (103a, 103b),
wherein the hinged portion includes or is associated with a latch to stow the external bladder (109) in a compressed state.

7. The safety seat (101) of any preceding claim including a reservoir bladder for storing a fluid to be supplied into the external (109) and/or internal bladder (110).

8. The safety seat (101) of any preceding claim, wherein the internal bladder (110) is interposed between the headrest (105) and the side wall (103a, 103b) such that the headrest (105) laterally moves in response to inflation of the internal bladder (110).

9. The safety seat (101) of any of any preceding claim, wherein the headrest (105) incorporates at least part of the internal bladder (110) or a further bladder in communication with the external bladder (109).

10. The safety seat (101) according to any preceding claim where the external (109) and/or internal bladder (110) are selectively detachable from the seat (101).

11. The safety seat (101) according to any of claim 3, wherein the valve or aperture (113) is located on a wall of the external bladder (109) facing the side wall (103a, 103b) and that, when the safety seat (101) is subjected to impact, the wall of the external bladder (109) contacts the side wall (103a, 103b) and acts to cut-off or restrict any pressure lost to atmosphere.

12. The safety seat (101) according to any preceding claim wherein the external bladder (109) is in the form of a collapsible bellow configured to maintain both a self-supporting collapsed state and self-supporting expanded state.

13. The safety seat (101) according to any preceding claim wherein the internal bladder (110) is elongate, and
wherein the internal bladder (110) extends down substantially the full length of the of the side wall (103a, 103b).

14. The safety seat (101) according to any preceding claim wherein the internal bladder (110) comprises a first end portion and a second end portion, the first end portion being axially longer than the second end portion, and
wherein the first end portion and the second end portion are connected via a narrower neck portion.

15. The safety seat (101) according to any preceding claim wherein inflation of the internal bladder (110) causes the internal bladder (110) to press against the headrest (105), thereby restricting a freedom of movement of the headrest (105).

## Patentansprüche

1. Sicherheitssitz (101), beinhaltend:
einen Sitzbereich (102), ein Paar Seitenwände (103a, 103b) und einen Rückenlehnenbereich (104) zum Aufnehmen eines Insassen;
einen inneren Balg (110) an einer Innenseite von mindestens einer des Paars der Seitenwände (103a, 103b);
einen äußeren Balg (109) an einer Außenseite von der mindestens einen des Paars der Seitenwände (103a, 103b);
wobei der äußere Balg (109) konfiguriert ist, um durch die mindestens eine des Paars der Seitenwände (103a, 103b) mit dem inneren Balg (110) in Fluidverbindung zu stehen;
wobei im Gebrauch der äußere Balg (109) konfiguriert ist, um sich in einem entkomprimierten Zustand zu befinden, und der innere Balg (110) konfiguriert ist, um sich in einem komprimierten Zustand zu befinden, sodass ein Aufprallereignis gegen den äußeren Balg (109) ein Aufblasen des inneren Balgs (110) bewirkt, **dadurch gekennzeichnet, dass** der Sicherheitssitz (101) ferner eine Kopfstütze (105) beinhaltet, die seitlich beweglich ist.

2. Sicherheitssitz (101) nach Anspruch 1, wobei der äußere Balg (109) in einer Position angeordnet ist, die mindestens einem Kopfbereich und/oder einem wesentlichen Bereich der mindestens einen des Paars der Seitenwände (103a, 103b) entspricht.

3. Sicherheitssitz (101) nach Anspruch 1 oder 2, wobei der äußere (109) und/oder innere Balg (110) mindestens ein Ventil oder eine Öffnung (113) beinhaltet, das bzw. die konfiguriert ist, um ein Gleichgewicht mit dem Umgebungsdruck und/oder das Zurückhalten des Flüssigkeitsvolumens während des Betriebs zu ermöglichen, und wobei der äußere Balg (109) nach dem Entleeren durch Ausdehnung wieder auffüllbar ist, indem Luft durch das Ventil oder die Öffnung (113) angesaugt wird.

4. Sicherheitssitz (101) nach einem vorhergehenden Anspruch, wobei der äußere Balg (109) in den entkomprimierten Zustand vorgespannt ist, und wobei die Vorspannung in den entkomprimierten Zustand durch eine Leporello- oder Faltenbalgstruktur bereitgestellt wird.

5. Sicherheitssitz (101) nach einem vorhergehenden Anspruch, wobei der äußere Balg (109) einen geschraubten Verbinder zum Aufnehmen durch eine Öffnung durch die mindestens eine des Paars der Seitenwände (103a, 103b) beinhaltet.

6. Sicherheitssitz (101) nach einem vorhergehenden Anspruch, wobei der äußere Balg (109) in einen gelenkigen Bereich integriert ist oder einen solchen beinhaltet, der gelenkig mit der mindestens einen des Paars der Seitenwände (103a, 103b) verbunden ist,
wobei der gelenkige Bereich eine Verriegelung beinhaltet oder einer solchen zugeordnet ist, um den äußeren Balg (109) in einem komprimierten Zustand zu verstauen.

7. Sicherheitssitz (101) nach einem vorhergehenden Anspruch, der einen Vorratsbalg zum Speichern einer in den äußeren (109) und/oder inneren Balg (110) zuzuführenden Flüssigkeit beinhaltet.

8. Sicherheitssitz (101) nach einem vorhergehenden Anspruch, wobei der innere Balg (110) zwischen der Kopfstütze (105) und der Seitenwand (103a, 103b) zwischengeschaltet ist, sodass sich die Kopfstütze (105) als Reaktion auf das Aufblasen des inneren Balgs (110) seitlich bewegt.

9. Sicherheitssitz (101) nach einem vorhergehenden Anspruch, wobei die Kopfstütze (105) mindestens einen Teil des inneren Balgs (110) oder eines weiteren Balgs in Verbindung mit dem äußeren Balg (109) integriert.

10. Sicherheitssitz (101) nach einem vorhergehenden Anspruch, wobei der äußere (109) und/oder innere Balg (110) auswählbar vom Sitz (101) abnehmbar sind.

11. Sicherheitssitz (101) nach Anspruch 3, wobei das Ventil oder die Öffnung (113) an einer Wand des äußeren Balgs (109) gegenüber der Seitenwand (103a, 103b) angeordnet ist, und dass, wenn der Sicherheitssitz (101) einem Aufprall ausgesetzt ist, die Wand des äußeren Balgs (109) die Seitenwand (103a, 103b) berührt und so wirkt, dass sie jeglichen an die Atmosphäre abgegebenen Druck abschneidet oder begrenzt.

12. Sicherheitssitz (101) nach einem vorhergehenden Anspruch, wobei sich der äußere Balg (109) in der Form eines zusammenfaltbaren Balgs befindet, der konfiguriert ist, um sowohl einen selbsttragenden zusammengefalteten Zustand als auch einen selbsttragenden expandierten Zustand beizubehalten.

13. Sicherheitssitz (101) nach einem vorhergehenden Anspruch, wobei der innere Balg (110) länglich ist und
wobei sich der innere Balg (110) im Wesentlichen über die gesamte Länge der Seitenwand (103a, 103b) nach unten erstreckt.

14. Sicherheitssitz (101) nach einem vorhergehenden Anspruch, wobei der innere Balg (110) einen ersten Endbereich und einen zweiten Endbereich umfasst, wobei der erste Endbereich axial länger als der zweite Endbereich ist, und
wobei der erste Endbereich und der zweite Endbereich über einen engeren Zapfenbereich verbunden sind.

15. Sicherheitssitz (101) nach einem vorhergehenden Anspruch, wobei das Aufblasen des inneren Balgs (110) bewirkt, dass der innere Balg (110) gegen die Kopfstütze (105) drückt, wodurch die Bewegungsfreiheit der Kopfstütze (105) eingeschränkt wird.

## Revendications

1. Siège de sécurité (101) comprenant :
une partie siège (102), deux parois latérales (103a, 103b) et une partie dossier (104) destinées à recevoir un occupant ;
un ballon interne(110) sur un côté intérieur d'au moins l'une des deux parois latérales (103a, 103b) ;
un ballon externe (109) sur un côté extérieur de ladite au moins l'une des deux parois latérales (103a, 103b) ;
ledit ballon externe (109) étant conçu pour communiquer fluidiquement, à travers au moins l'une des deux parois latérales (103a, 103b), avec le ballon interne (110) ;
lors de l'utilisation, ledit ballon externe (109) étant conçu pour se trouver dans un état décomprimé et ledit ballon interne (110) étant conçu pour se trouver dans un état comprimé, de sorte qu'un événement de choc contre le ballon externe (109) provoque le gonflage du ballon interne (110), **caractérisé en ce que** le siège de sécurité (101) comprend en outre un appuitête (105) qui peut se déplacer latéralement.

2. Siège de sécurité (101) selon la revendication 1, ledit ballon externe (109) se trouvant dans une position correspondant à au moins une partie de tête et/ou une partie substantielle de ladite au moins l'une des deux parois latérales (103a, 103b).

3. Siège de sécurité (101) selon la revendication 1 ou 2, ledit ballon externe (109) et/ou interne (110) comprenant au moins une valve ou une ouverture (113) conçue pour permettre l' équilibre à la pression ambiante et/ou la rétention du volume de fluide pendant le fonctionnement, et ledit ballon externe (109) pouvant être rempli après dégonflage par dilatation, en aspirant de l'air par la valve ou l'ouverture (113).

4. Siège de sécurité (101) selon l'une quelconque des revendications précédentes, ledit ballon externe (109) étant sollicité vers l'état décomprimé, et ladite sollicitation vers l'état décomprimé étant assurée par une structure en accordéon ou à soufflet.

5. Siège de sécurité (101) selon l'une quelconque des revendications précédentes, ledit ballon externe (109) comprenant un raccord fileté destiné à être reçu par une ouverture traversant ladite au moins l'une des deux parois latérales (103a, 103b).

6. Siège de sécurité (101) selon l'une quelconque des revendications précédentes, ledit ballon externe (109) étant incorporé dans une partie articulée ou la comprenant, raccordée de manière articulée à au moins l'une des deux parois latérales (103a, 103b), ladite partie articulée comprenant ou étant associée à un verrou de manière à ranger le ballon externe (109) dans un état comprimé.

7. Siège de sécurité (101) selon l'une quelconque des revendications précédentes, comprenant un ballon réservoir destiné à stocker un fluide devant être alimenté dans le ballon externe (109) et/ou interne (110).

8. Siège de sécurité (101) selon l'une quelconque des revendications précédentes, ledit ballon interne (110) étant intercalé entre l'appui-tête (105) et la paroi latérale (103a, 103b) de sorte que l'appui-tête (105) se déplace latéralement en réponse au gonflage du ballon interne (110).

9. Siège de sécurité (101) selon l'une quelconque des revendications précédentes, ledit appuitête (105) incorporant au moins une partie du ballon interne (110) ou un ballon supplémentaire en communication avec le ballon externe (109).

10. Siège de sécurité (101) selon l'une quelconque des revendications précédentes, ledit ballon externe (109) et/ou interne (110) étant détachable du siège (101) de manière sélective.

11. Siège de sécurité (101) selon la revendication 3, ladite valve ou ouverture (113) se trouvant sur une paroi du ballon externe (109) faisant face à la paroi latérale (103a, 103b) et que, lorsque le siège de sécurité (101) est soumis à un choc, la paroi du ballon externe (109) entrant en contact avec la paroi latérale (103a, 103b) et agissant de manière à couper ou restreindre toute perte de pression vers l'atmosphère.

12. Siège de sécurité (101) selon l'une quelconque des revendications précédentes, ledit ballon externe (109) se présentant sous la forme d'un soufflet pliable conçu pour maintenir à la fois un état replié autoporteur et un état déployé autoporteur.

13. Siège de sécurité (101) selon l'une quelconque des revendications précédentes, ledit ballon interne (110) étant allongé et ledit ballon interne (110) s'étendant vers le bas sensiblement sur toute la longueur de la paroi latérale (103a, 103b).

14. Siège de sécurité (101) selon l'une quelconque des revendications précédentes, ledit ballon interne (110) comprenant une première partie d' extrémité et une seconde partie d' extrémité, ladite première partie d'extrémité étant axialement plus longue que la seconde partie d'extrémité, et ladite première partie d'extrémité et ladite seconde partie d'extrémité étant raccordées par l'intermédiaire d'une partie de col plus étroite.

15. Siège de sécurité (101) selon l'une quelconque des revendications précédentes, ledit gonflement du ballon interne (110) amenant le ballon interne (110) à appuyer contre l'appuitête (105), ce qui permet de restreindre la liberté de mouvement de l'appui-tête (105).
